# EUROPÄISCHE PATENTANMELDUNG

(11) **EP 0 595 178 A1**
(43) Veröffentlichungstag der Anmeldung: **04.05.1994**
(21) Anmeldenummer: 93116971.8
(22) Anmeldetag: 20.10.1993
(51) Int. Cl.: C02F 1/46

(54) **Vorrichtung zur elektrolytischen Behandlung von Abwässern**

(30) Priorität: 23.10.1992 DE 4235834
(71) Anmelder: Bäumer, Michael, D-48155 Münster (DE); Horstick, Ulrich, D-48712 Gescher (DE)
(72) Erfinder: Ganzewitsch, Alexander L'Wowitsch, Minsk, d. 48 kw.III (BY); Ganzewitsch, Gennadij L'Wowitsch, Minsk, d. 63 kd. 63 (BY); Losew, Jurij Pawlowitsch, Minsk, d. 59 kw. 8 (BY); Podwojskij, Pjotr Pawlowitsch, Minsk, d. 123 kw. 16 (BY)
(74) Vertreter: Grünecker, Kinkeldey, Stockmair & Schwanhäusser Anwaltssozietät

(57) **Zusammenfassung**

Die Erfindung betrifft eine Vorrichtung zur elektrolytischen Behandlung von Abwässern. Es wird eine verbesserte Elektrolysekammer vorgeschlagen, in der zu reinigendes, aufzubereitendes Wasser zunächst durch wenigstens eine Anodenkammer mit einer anodisch nicht löslichen Anode und dann durch eine Anodenkammer mit einer löslichen, durchlässigen Eisenanode fließt. Vor dem Durchfluß durch die Anodenkammer mit der löslichen Eisenanode werden dem aufzubereitendem Wasser Koksteilchen zugesetzt, so daß beim Durchgang des Wassers durch die lösliche Eisenanode ein zur Wasserreinigung dienender Galvanokoagulationsprozeß ausgelöst wird. Parallel zu dem aufzubereitenden Wasser wird durch eine an beide Anodenkammern getrennt durch eine neutrale poröse Scheidewand angrenzende Kathodenkammer neutrales Wasser geleitet, das zur Reinigung mit dem durch die Anodenkammern geleiteten Wasser vermischt werden kann. Durch die erfindungsgemäße Vorrichtung lassen sich Abwässer, insbesondere Schwermetallionen enthaltende Abwässer effizient bei geringem Elektrolysestromverbrauch reinigen.

## Beschreibung

Die Vorrichtung ist in Anlagen zur elektrochemischen Reinigung von Abwässern oder rückgefuhrtem Kühlwasser verwendbar, wobei in dem zu reinigenden Wasser Verunreinigungen dispergiert, emulgiert oder gelöst sind.

Aus dem Urheberschein Hr. 1432012 der UdSSR ist eine Vorrichtung für die elektrochemische Behandlung von Abwässern, die sechswertiges Chrom- und Schwermetallionen enthalten, bekannt. Diese Vorrichtung besteht aus einem Gehäuse aus einem dielektrischen Werkstoff, in dessen Innenraum auf einer Seite ein sich über die gesamte Gehäuselänge erstreckende Kathodenkammer und auf der anderen Seite zwei Kathodenkammern vorgesehen sind. Die Kathodenkammer ist von den beiden Anodenkammern durch eine vertikale, neutrale durchlässige Scheidewand getrennt. Die beiden Anodenkammern sind durch eine Überlaufkammer miteinander verbunden. Eine flächenhaft ausgedehnte vertikale Stahlkathode ist entlang der Außenwand der Kathodenkammer angeordnet. Eine der Anodenkammern weist eine flache vertikale, nicht lösliche Anode auf, die nahe der Außenwand der Anodenkammer angeordnet ist. Die andere Anodenkammer ist mit einer löslichen Anode aus Eisenteilchen gefüllt, die über den ganzen Innenraum der Kammer verteilt sind. Der Boden dieser eine lösliche Anode aufweisenden Anodenkammer ist perforiert und darunter befindet sich eine Auffangwanne. Circa 30 % der Menge des zu behandelnden Abwassers wird zunächst in die Anodenkammer der nicht löslichen Anode eingeleitet, von wo es über die Überlaufkammer in die Kammer mit der löslichen Anode und von dort durch den perforierten Boden in die Auffangwanne fließt. Das durch die einfüllbare Anode filtrierte Wasser kann dann mit dem restlichen durch die Kathodenkammer geströmten, zu reinigenden Wasser vermischt werden. Der Nachteil dieser Anlage besteht in einer ungenügenden Reinigung des Wassers von Chrom-(VI) und einem beträchtlichen Elektroenergieverbrauch.

Es ist die Aufgabe der Erfindung, eine gegenüber diesem Stand der Technik verbesserte Vorrichtung zur Abwasserbehandlung zu schaffen.

Diese Aufgabe wird durch die im kennzeichnenden Teil des Anspruchs 1 angegebenen Merkmale gelöst.

Die Vorrichtung nach der vorliegenden Erfindung ermöglicht eine effizientere Abwasserbehandlung. Insbesondere ist der Verbrauch an Elektroenergie verringert.

In einer bevorzugten Ausführungsform der Erfindung ist das Gehäuse durch vier ebene Scheidewände in eine zentrale, als Anodenkammer mit der löslichen Anode dienenden Kammer, zwei zu der zentralen Kammer seitliche Kathodenkammern und zwei äußere seitliche Anodenkammern mit anodisch nicht löslicher Anode unterteilt, wobei die seitlichen Kathodenund Anodenkammern jeweils etwa gleich groß sind.

In vorteilhafter Ausgestaltung der Erfindung sind flächenhaft ausgedehnte Kathoden und Anoden vorgesehen, die jeweils angrenzend an die zwischen den Anoden- und Kathodenkammern angeordneten Scheidewände angeordnet sind, sich im wesentlichen über die Fläche der Scheidewände erstrecken und zur Gewährleistung eines Ionenaustausches zwischen den Kammern durchlässig, z.B. perforiert, sind, wobei Durchlässigkeitsbereiche, z.B. Perforationslöcher, einer Flächenanode auf einer Seite der Scheidewand zu Durchlässigkeitsbereichen in der Kathode auf der gegenüberliegenden Seite der Scheidewand ausgerichtet sind.

Weitere vorteilhafte Ausgestaltungsmöglichkeiten der Erfindung gehen aus den Unteransprüchen hervor.

Die Erfindung soll nun anhand von Ausführungsbeispielen unter Bezugnahme auf die beiliegenden Zeichnungen weiter erläutert und beschrieben werden. Es zeigen:
- Fig.1: ein erstes Ausführungsbeispiel für eine erfindungsgemäße Vorrichtung zur Abwasserbehandlung, und
- Fig.2: ein weiteres Beispiel für eine erfindungsgemäße Vorrichtung zur Abwasserbehandlung.

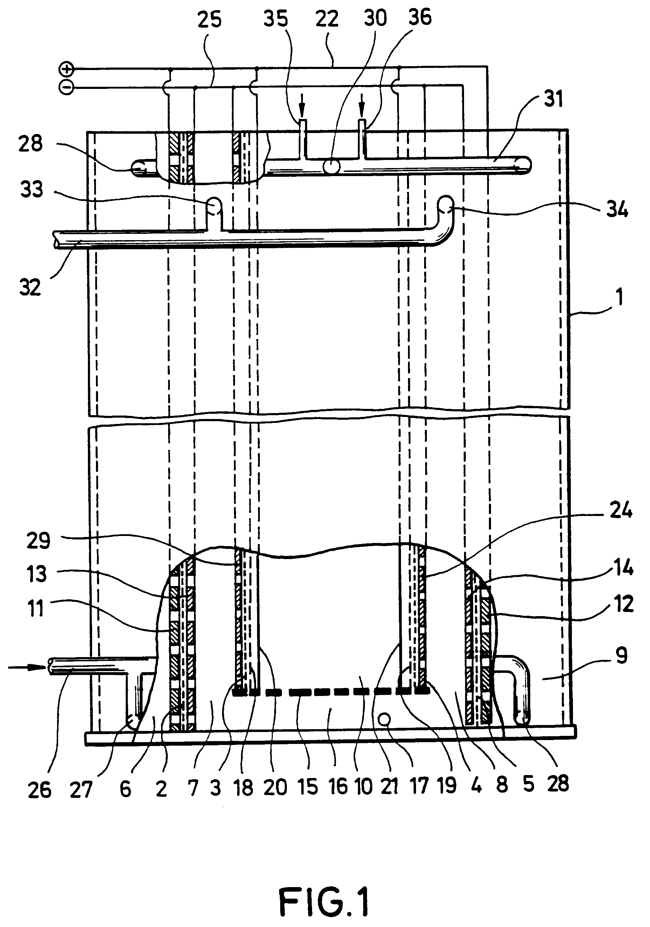

Mit dem Bezugszeichen 1 ist in der Figur 1 ein Elektrolysekammergehäuse aus einem dielektrischen Material bezeichnet. Die Elektrolysekammer 1 ist durch vier neutrale durchlässige Scheidewände 2 bis 5, die sich in einer Ebene in vertikaler Richtung erstrecken, in fünf Kammern 6 bis 10 unterteilt. Bei den beiden äußeren Kammern 6 und 9 und der zentralen Kammer 10 handelt es sich um Anodenkammern. Die zwischen den Anodenkammern angeordneten Kammern 7 und 8 sind Kathodenkammern. In jeder der äußeren Anodenkammern 6 und 9 erstreckt sich angrenzend an die neutrale durchlässige Scheidewand 2 bzw. 5 eine perforierte Anode 11 bzw. 12. Auf der den perforierten Anoden 11 und 12 jeweils gegenüberliegenden Seite der Scheidewand 2 bzw. 5 ist in der Kathodenkammer 7 bzw. 8 angrenzend an die Scheidewand eine Stahlkatnode 13 bzw. 14 angeordnet. In dem gezeigten Ausführungsbeispiel erstrecken sich die anodisch nicht löslichen Anoden 11 und 12 in den Anodenkammern 6 und 9 und die Stahlkathoden 13 und 14 in den Kathodenkammern 7 und 8 jeweils über die gesamte Fläche der Scheidewand 2 bzw. 5. Die perforierten Anoden und Kathoden weisen Perforationslöcher auf, die zueinander ausgerichtet sind, so daß durch die neutrale durchlässige Scheidewand hindurch Verbindungen zwischen den Kathodenkammern und den Anodenkammern hergestellt sind.

Die zentrale Anodenkammer 10 weist einen perforierten Boden 15 aus einem dielektrischen Material auf, der unter Bildung einer mit der Anodenkammer 10 und den angrenzenden Kathodenkammern 7 und 8 in Verbindung stehenden Auffang- und Mischkammer 16 vom Boden des Elektrolysekammergehäuses 1 beabstandet angeordnet ist. An den durch die Scheidewände 3 und 4 gebildeten Wänden der Anodenkammer 10 sind angrenzend an die Scheidewände 3 und 4 Schutzgitter 18 und 19 aus einem dielektrischen Material angeordnet. Nahezu das gesamte Innenvolumen der Anodenkammer 10 ist mit eine durchlässige poröse Masse bildenden Eisenspänen ausgefüllt. In die poröse Masse aus Eisenspänen stehen jeweils nahe einem der Schutzgitter 18 und 19 Kontaktschienen 20 und 21 hinein. Die Kontaktschienen 20 und 21 sind wie die nicht löslichen Anoden 11 und 12 über eine sich verzweigende Leitung 22 mit dem Pluspol einer (nicht gezeigten) Elektrolysekammerstromquelle verbunden.

Die Kathodenkammern 7 und 8 weisen neben den Stahlkathoden 13 und 14 auf der gegenüberliegenden Kammerseite angrenzend an die Scheidewand 3 bzw. 4 eine weitere Stahlkathode 23 bzw. 24 auf. Die Stahlkatnoden 23 und 24 erstrecken sich in dem gezeigten Ausführungsbeispiel über die gesamte Fläche der Scheidewand 3 bzw. 4. Über eine sich verzweigende Leitung 25 sind die Kathoden 13 und 14 sowie 23 und 24 mit dem Minuspol der Stromquelle der Elektrolysekammer verbunden.

Mit dem Bezugszeichen 26 ist in der Figur 1 eine Leitung mit zwei Einlaufstutzen 27 und 28 am unteren Ende der Anodenkammer 6 bzw. 9 bezeichnet. Die Leitung 26 ist für die Zufuhr von zu reinigendem, in der Elektrolysekammer aufzubereitendem Wasser vorgesehen. An ihrem oberen Ende ist an die Elektrolysekammer 6 und die Elektrolysekammer 9 eine Überlaufleitung 29 bzw. 31 angeschlossen. Die Überlaufleitungen 29 und 31 münden in einen gemeinsamen Einlaufstutzen 30, der in den oberen Teil der Anodenkammer 10 führt.

Mit dem Bezugszeichen 32 ist in der Figur 1 eine Zuflußleitung mit einem Einlaufstutzen 33 im oberen Teil der Kathodenkammer 7 und einem Einlaufstutzen 34 im oberen Teil der Kathodenkammer 8 bezeichnet. Die Leitung 32 ist für die Zuführung von neutralem Wasser in die Kathodenkammern 7 und 8 vorgesehen. Die Misch- und Auffangkammer 16 weist einen Auslaufstutzen 17 auf, durch welchen in der Elektrolysekammer aufbereitetes Wasser zur weiteren Reiniguhgsbehandlung aus der Elektrolysekammer abführbar ist.

Mit 35 und 36 sind in die Überlaufleitungen 29 und 31 einmündende Einlaufstutzen für eine Wasser-Kokssuspension aus einem in der Figur 1 nicht gezeigten Vorratsbehälter bezeichnet.

Im gezeigten Ausführungsbeispiel weist die Elektrolysekammer einen zur vertikalen Mittellängsachse der Elektrolysekammer 10 weitgehend symmetrischen Aufbau auf. Eine Besonderheit des gezeigten Ausführungsbeispiels besteht weiterhin darin, daß das Volumen der seitlichen Anodenkammer mit der löslichen Anode und der Kathodenkammer von vergleichbarer Größe ist.

Im folgenden wird die Funktionsweise der in der Figur 1 gezeigten Vorrichtung beschrieben. Der mit Eisenteilchen (z.B. mit Stahlspänen) aufgefüllten Anodenkammer 10 wird über die Kontaktschienen 20 und 21 Gleichstrom von der externen Elektrolysekammerstromquelle zugeführt. Über die Einlaufstutzen 27 und 28 wird in die Anodenkammern 6 und 9 das zu reinigende Wasser und über die Einlaufstutzen 33 und 34 neutrales Wasser in die Kathodenkammer 7 und 8 eingeleitet. Durch die Wasserelektrolyse wird an der Oberfläche der Anoden 11 und 12 Sauerstoff freigesetzt und das durch die Kammern 6 und 9 fließende Wasser in einen sauren Zustand gebracht. An der Oberfläche der Kathoden 13 und 14 wird Wasserstoff freigesetzt und das durch die Kammern 7 und 8 geleitete neutrale Wasser wird alkalisiert. Das saure, zu reinigende Wasser wird über die Überlaufleitungen 29 und 31 und den Einlaufstutzen 30 in die Anodenkammer 10 geleitet. Dem in die Anodenkammer 10 geleiteten Wasser wird über die Einlaufstutzen 35 und 36 eine Wasserkoksteilchensuspension zugeführt. Anstelle der Zuführung einer Wasser-Kokssuspension könnte auch direkt Koksteilchenstaub in das der Anodenkammer 10 zuzuführende, zu reinigende Wasser eingebracht werden. In der Anodenkammer 10 berühren die von der Strömung bewegten Koksteilchen die Eisenteilchen und bilden in großer Zahl kurzlebige Galvanopaare Eisen-Koks, die im zu reinigenden Wasser den Prozeß der Galvanokoagulation bewirken. Die wichtigsten Bestandteile dieses Prozesses sind die Auflösung der Eisenteilchen unter Abscheidung von Eisen-(II)-Ionen und die Reduktion der Wasserstoffionen bis zu atomarem Wasserstoff. Bei Anwesenheit von Chrom-(VI) im Wasser wird dieser zu Chrom-(III) reduziert, während eine Oxidation des Eisens-(II) zu Eisen-(III) erfolgt. Je nach der Strömung des Wassers durch die poröse Masse der Eisenteilchen nimmt der Säuregehalt des Wassers ab und der Prozeß der Eisenauflösung verlangsamt sich. Die Abnahme des Säuregrades des Wassers wird teilweise durch seine Elektrolyse an der Oberfläche der Scheidewände 3 und 4 kompensiert, wobei in den Katnodenkammern 7 und 8 das neutrale Wasser entsprechend alkalisiert wird. Das aufbereitete Wasser aus der Anodenkammer 10 gelangt durch den perforierten Boden 15 in die Auffang- und Mischkammer 16, wo es mit dem alkalisierten Wasser aus den Kathodenkammern 7 und 8 vermischt wird. Das Wassergemisch wird anschließend aus der Kammer 16 über den Ausgangsanschluß 17 in eine Kläreinrichtung geleitet, wo aus dem Gemisch aus aufbereitetem Wasser und alkalisiertem neutralen Wasser Verunreinigungen, insbesondere im Wasser enthaltene Schwermetallionen, hauptsächlich gebunden an unlösliche Hydroxide ausgeschieden werden.

Bei geringem Gehalt an Begleitstoffen im zu reinigenden Wasser können die Kathodenkammern 7 und 8 statt mit neutralem Wasser mit aufbereitetem Wasser aus der Elektrolysekammer 10 beschickt werden. In diesem Fall tritt das aufbereitete Wasser aus der Auffang- und Mischkammer 16 im Unterschied zum neutralen Wasser von unten nach oben durch die Kathodenkammern 7 und 8 und das aufbereitete, durch die Kathodenkammern geleitete Wasser fließt über die Stutzen 33 und 34 und die Leitung 32 in eine Kläreinrichtung. In den Kathodenkammern wird das aufbereitete Wasser alkalisiert, was zu einer beschleunigten Bildung von Hydroxidsedimenten, einschließlich Eisenhydroxidsedimenten des in der Anodenkammer 10 aufgelösten Eisens in der Kläreinrichtung führt.

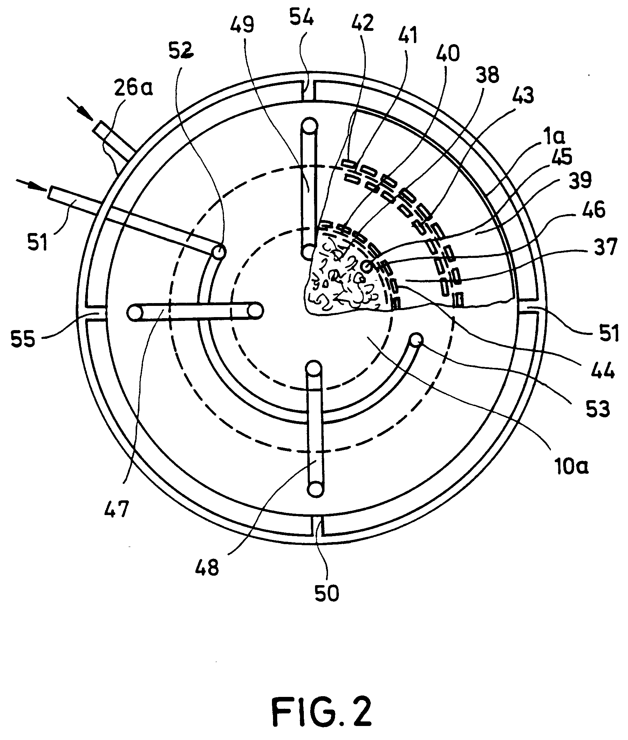

Es wird nun auf Figur 2 Bezug genommen, in der ein weiteres Ausführungsbeispiel für eine Elektrolysekammer nach der vorliegenden Erfindung gezeigt ist. In der Figur 2 sind gleiche oder gleichwirkende Teile mit der gleichen, jedoch mit dem Index a versehenen Bezugszahl wie in der Figur 1 bezeichnet. Das Ausführungsbeispiel von Figur 2 unterscheidet sich von dem Ausführungsbeispiel von Figur 1 darin, daß eine zentrale Anodenkammer 10a mit einer Füllung aus Eisenteilchen von einer ringförmigen Kathodenkammer 37 umgeben ist, und die ringförmige Kathodenkammer 37 ihrerseits von einer ringförmigen Anodenkammer 39 umgeben ist. Die zentrale Anodenkammer 10a ist von der ringförmigen Kathodenkammer 37 durch eine zylindrische neutrale, durchlässige Scheidenwand 40 getrennt, während die ringförmige Kathodenkammer 37 von der ringförmigen Anodenkammer 39 durch eine zylindrische neutrale, durchlässige Scheidewand 41 getrennt ist. Angrenzend an die zylindrische Scheidenwand 41 ist in der Anodenkammer 39 eine zylindrische, anodisch nicht lösliche Kathode 42 angeordnet. Auf der der anodisch nicht löslichen Anode 42 gegenüberliegenden Seite der Scheidewand 41 ist in der Kathodenkammer 37 eine erste zylindrische Stahlkathode 43 angeordnet. Sowohl die anodisch nicht lösliche Anode 42 als auch die Stahlkathode 43 sind perforiert, wobei Perforationslöcher so zueinander ausgerichtet sind, daß durch die neutrale Scheidewand 41 hindurch Verbindungen zwischen der Anodenkammer 39 und der Kathodenkammer 37 hergestellt sind. Die Kathodenkammer 37 weist eine weitere zylindrische Stahlkathode 44 auf, die angrenzend an die zylindrische neutrale Scheidewand 40, die die zentrale Anodenkammer 10a von der ringförmigen Katnodenkammer 37 trennt, angeordnet ist. Mit dem Bezugszeichen 45 ist in der Figur 2 eine mit dem Pluspol einer in der Figur 2 nicht gezeigten Stromquelle für die Elektrolysekammer verbundene Stromschiene bezeichnet, die in die in der zentralen Anodenkammer 10a aufgeschüttete Eisenteilchenmasse hineinsteht. Die zentrale Anodenkammer 10a weist wie die Anodenkammer 10 gemäß der Figur 1 einen in der Figur 2 nicht sichtbaren perforierten Boden auf. Angrenzend an die zylindrische Scheidewand 40 ist ein Schutzgitter 46 aus einem dielektrischen Material angeordnet. Unter der zentralen Anodenkammer und unter der ringförmigen Kathodenkammer 37 befindet sich eine in der Figur 2 nicht sichtbaren Misch- und Auffangkammer, die die Anodenkammer 10a mit der Ringkammer 37 verbindet.

Mit den Bezugszeichen 47 bis 49 sind die zentrale Anodenkammer 10a mit der äußeren Anodenkammer 39 verbindende Überlaufleitungen bezeichnet. Am unteren Ende der äußeren Ringkammer 39 ist eine Ringleitung 26a vorgesehen, über die zu reinigendes Wasser durch Einlaufstutzen 50 bis 55 in die ringförmige Anodenkammer 39 geleitete werden kann. Über eine Zuleitung 51 ist neutrales Wasser von oben her in die ringförmige Kathodenkammer 37 einfüllbar. Die Leitung 51 weist zwei Einlaufstutzen 52 und 53 auf, über die das neutrale Wasser an zwei diametral gegenüberliegenden Stellen in die ringförmige Katnodenkammer eingeleitet werden kann. Zur Aufbereitung wird zu reinigendes Wasser über die Ringleitung 26a in die ringförmige Anodenkammer 39 geleitet, von wo es durch die Überlaufleitungen in die zentrale Anodenkammer 10a gelangen kann. Gleichzeitig wird neutrales Wasser durch die Kathodenkammern geschickt. Dabei spielen sich die gleichen Reaktionen ab, wie sie anhand der Vorrichtung von Figur 1 bereits beschrieben wurden. Aus der in Figur 2 nicht sichtbaren Mischkammer wird die Mischung aus aufbereitetem Wasser und neutralem, durch die Kathodenkammer geleiteten Wasser einer Kläreinrichtung zugeleitet, wo Verunreinigungen im wesentlichen in Form von unlöslichen Hydroxiden und Metalloxiden als Folge des sich in der Anodenkammer 10a eingeleiteten Galvanokoagulationsprozesses abgeschieden werden. Die Klärrückstände weisen nur einen sehr geringen Schlammanteil auf.

Im folgenden werden Beispiele für durchgeführte Reinigungsversuche beschrieben.

### Beispiel 1

Es wurde Wasser mit einem Gehalt an Chrom-(VI) von 88,1 mg/dm³ und einem ph-Wert von 9,k2 gereinigt.

Die Reinigung des Wassers wurde unter den folgenden Bedingungen durchgeführt: Kokszuführung - 10 g pro m³ Wasser; Aufbereitungszeit des Wassers in der Anodenkammer mit der löslichen Anode - 3,3 Minuten; Durchfluß von neutralem Waser - 15 % des Durchflusses vom zu reinigenden Wasser; relative Kathodengleichstromdichte - 45 A/m²; Spannung an den stromzuführenden Schienen - 7,5 v. Das Gemisch des aufbereiteten, zu reinigenden Wassers und des neutralen Wassers wies kein Chrom-(VI) mehr auf. Die Elektrizitätsmenge für die Wasseraufbereitung betrug 145,5 Ah m³ des zu reinigenden Wasers und der Elektroenergieverbrauch betrug 1,09 kWh/m³.

### Beispiel 2

Es wurde das gleiche Wasser wie im Beispiel 1 gereinigt.

Die Aufbereitung des Wasser wurde unter den folgenden Bedingungen durchgeführt: Kokszuführung - 10 g pro m³ Wasser; Aufbereitungszeit des Wassers in der Anodenkammer mit der löslichen Anode - 3,3 Minuten; Durchfluß von neutralem Wasser - 15 % des Durchflusses des zu reinigenden Wassers; relative Kathodengleichstromdichte - 42 A/m²; Spannung an den stromzuführenden Schienen - 7,0 V. Das Gemisch aus aufbereitetem, zu reinigendem Wasser und neutralem Wasser wies einen Gehalt an Chrom-(VI) von 0,07 mg/dm³ auf.

### Beispiel 3

Es wurde das gleiche Wasser wie im Beispiel 1 gereinigt.

Die Aufbereitung des Wassers wurde unter den folgenden Bedingungen durchgeführt: Die Stromzuführungen zu der Anodenkammer mit löslicher Anode waren abgeschaltet; Kokszuführung - 10 g pro m³ Wasser; Aufbereitungszeit des Wassers in der Anodenkammer mit der löslichen Anode - 3,3 Minuten; Durchfluß von neutralem Waser - 15 % des Durchflusses des zu reinigenden Wassers; relative Kathodengleichstromdichte - 87 A/m²; Spannung an den stromzuführenden Schienen - 10,0 v. Das Gemisch aus aufbereitetem, zu reinigenden Wasser und aus neutralem Wassers wies einen Gehalt an Chrom-(VI) von 0,94 mg/dm³ auf. Die Elektrizitätsmenge für die Wasseraufbereitung betrug 145,5 Ah des und der Elektroenergieverbrauch war bei 1,46 kWh/m³.

### Beispiel 4

Es wurde Wasser mit einem Gehalt an Chrom-(VI) von 29,4 mg/dm³ und einem ph-Wert von 9,2 gereinigt.

Die Aufbereitung des Wassers wurde unter folgenden Bedingungen durchgeführt: Kokszuführung - 5 g pro m³ Wasser; Aufbereitungszeit des Wassers in der Anodenkammer mit der löslichen Anode - 3,3 Minuten; relative Kathodengleichstromdichte - 45A/m²; Spannung an den stromzuführenden Schienen - 7,5 V. Das zu reinigende Wasser wurde durch die Kathodenkammer durchgeleitet. Das aufbereitete Wasser wies am Ausgang aus der Kathodenkammer kein Chrom-(VI) mehr auf. Die Elektrizitätsmenge für die Wasseraufbereitung betrug in Umrechnung auf einen m³ des zu reinigenden Wassers 145,5 Ah und der Elektroenergieverbrauch lag bei 1,09 kWh/m³. Nach 24 Stunden des Anlagenbetriebes wurde in den Katnodenkammern Sinkstoffablagerungen festgestellt.

### Beispiel 5

Es wurde ein Wasser mit einem Gehalt an Chrom-(VI) von 22,0 mg/dm³ und einem pH-Wert von9,2 gereinigt.

Die Aufbereitung des Wassers wurde unter folgenden Bedingungen durchgeführt: Kokszufuhrung - 4,5 g pro m³ Wasser; Aufbereitungszeit des Wassers in der Anodenkammer mit der löslichen Anode - 3,3 Minuten; relative Kathodengleichstromdichte - 45 A/m²; Spannung an den stromzuführenden Schienen - 7,5 V. Das zu reinigende Wasser wurde durch die Kathodenkammer durchgeleitet. Das aufbereitete Wasser wies am Ausgang aus der Kathodenkammer kein Chrom- (VI) mehr auf. Die Elektrizitätsmenge für die Wasseraufbereitung betrug 145,5 Ah/m³. Nach 24 Stunden des Anlagenbetriebes wurden in den Kathodenkammern noch keine Sinkstoffablagerungen festgestellt.

Beim Vergleich der vorliegenden Beispiele 3 und 1 ist zu sehen, daß die Unterbrechung der Stromzuführung an die Anodenkammer mit löslicher Anode, d.h.die Unterbindung der zusätzlichen Ansäuerung des Wassers bei gleichbleibendem Stromverbrauch zu einer nicht ausreichenden Reinigung von Chrom-(VI) führt.

Aus dem Vergleich der vorliegenden Beispiele 5 und 4 ist ersichtlich, daß bei einem bestimmten Konentrationsniveau von Begleitstoffen im zu reinigenden Wasser die Möglichkeit besteht, das zu reinigende Wasser in die Kathodenkammern einzuleiten, d.h. anstatt des neutralen Wassers unmittelbar das zu reinigende Wasser zu verwenden.

## Patentansprüche

1. Vorrichtung zur Behandlung von Abwässern, mit einer Elektrolysekammer für den Durchfluß von in der Kammer zu behandelndem Abwasser, wobei die Elektrolysekammer ein Gehäuse (1) aus einem dielektrischen Material aufweist und wenigstens eine Kathodenkammer (7, 8), wenigstens eine Anodenkammer (6, 9) mit einer anodisch unlöslichen Anode, eine dieser in Durchflußrichtung nachgeordnete Anodenkammer (10) mit einer löslichen, das Kammervolumen im wesentlichen ausfüllenden, durchlässigen Eisenanode und die Anodenkammern gegen die Kathodenkammer abgrenzende neutrale durchlässige Scheidewände (2-5) umfaßt, **dadurch gekennzeichnet,** daß die Anodenkammern (6, 9, 10) ausschließlich für den Durchfluß von zu behandelndem Abwasser und die wenigstens eine Kathodenkammer (7, 8) für den Durchfluß von neutralem Wasser parallel zu dem Abwasser in den Anodenkammern oder von durch die Anodenkammern geflossenem, behandelten Wasser vorgesehen ist, und
daß zwischen der Anodenkammer (10) mit der anodisch nicht löslichen Anode und der wenigstens einen Anodenkammer (6, 9) mit der löslichen Anode eine Einrichtung zum Einbringen von Kohlenstoffteilchen in das Abwasser zur Aufbereitung des Abwassers in der Eisenanode zwecks Abscheidung von Verunreinigungen durch Galvanokoagulation auf der Basis von Galvanopaaren Eisen-Kohlenstoff angeordnet ist.

2. Vorrichtung nach Anspruch 1, **dadurch gekennzeichnet,** daß die wenigstens eine Kathodenkammer (7, 8) zwischen der Anodenkammer mit der anodisch löslichen Anode (10) und einer Anodenkammer (6, 9) mit einer nicht löslichen Anode angeordnet ist.

3. Vorrichtung nach Anspruch 1 oder 2, **dadurch gekennzeichnet,** daß die Anodenkammer mit der löslichen Anode als zentrale Kammer (10) mit wenigstens zwei angrenzenden Kathodenkammern (7, 8) vorgesehen ist.

4. Vorrichtung nach einem der Ansprüche 1 bis 3, **dadurch gekennzeichnet,** daß das Gehäuse (1) durch vier ebene Scheidewände (2-5) in eine zentrale, als Anodenkammer mit der löslichen Anode dienenden Kammer, zwei zu der zentralen Kammer seitliche Kathodenkammern (7, 8) und zwei äußere seitliche Anodenkammern (6, 9) mit anodisch nicht löslicher Anode unterteilt ist.

5. Vorrichtung nach Anspruch 4, **dadurch gekennzeichnet,** daß das Gehäuse durch Scheidewände (2-5) in bezug auf eine Achse der zentralen Kammer (10) symmetrisch unterteilt ist.

6. Vorrichtung nach Anspruch 4 oder 5, **dadurch gekennzeichnet,** daß die seitlichen Kathodenkammern (7, 8) und die seitlichen Anodenkammern (6, 9) etwa gleich groß sind.

7. Vorrichtung nach einem der Ansprüche 1 bis 3, **dadurch gekennzeichnet,** daß das Gehäuse (1a) durch zwei zylindrische Scheidewände (40, 41) in eine zentrale, als Anodenkammer mit der löslichen Anode dienende Kammer (10a), eine die zentrale Kammer umgebende Ringkathodenkammer (37) und eine die Ringkathodenkammer umgebende Ringanodenkammer (39) mit anodisch nicht löslicher Anode (42) unterteilt ist.

8. Vorrichtung nach einem der Ansprüche 1 bis 7, **dadurch gekennzeichnet,** daß die wenigstens eine Kathodenkammer (7, 8; 37) wenigstens eine als Flächenkathode ausgebildete Kathode aufweist.

9. Vorrichtung nach einem der Ansprüche 1 bis 8, **dadurch gekennzeichnet,** daß die wenigstens eine Anodenkammer (6, 9, 39) mit einer anodisch nicht löslichen Anode eine als Flächenanode (11, 42) ausgebildete Anode aufweist.

10. Vorrichtung nach Anspruch 8 oder 9, **dadurch gekennzeichnet,** daß die Flächenkathode und/oder die Flächenanode durchlässig ist.

11. Vorrichtung nach Anspruch 10, **dadurch gekennzeichnet,** daß die durchlässige Flächenkathode und/oder Flächenanode perforiert ist.

12. Vorrichtung nach einem der Ansprüche 8 bis 11, **dadurch gekennzeichnet,** daß die Flächenkathode angrenzend an eine die Kathodenkammer begrenzende neutrale Scheidewand angeordnet ist.

13. Vorrichtung nach Anspruch 12, **dadurch gekennzeichnet,** daß sich sich Flächenkathode im wesentlichen über die Fläche der Scheidewand erstreckt.

14. Vorrichtung nach Anspruch 13, **dadurch gekennzeichnet,** daß entsprechend mehreren die Kathodenkammer begrenzenden Scheidewänden mehrere (13, 14; 23, 24) Kathoden vorgesehen sind.

15. Vorrichtung nach einem der Ansprüche 8 bis 14, **dadurch gekennzeichnet,** daß die Flächenanode nahe der die Anodenkammer begrenzenden neutralen Scheidewand angeordnet ist.

16. Vorrichtung nach Anspruch 14 oder 15, **dadurch gekennzeichnet,** daß Durchlässigkeitsbereiche der durchlässigen Flächenkathode auf einer Seite der Scheidewand zu Durchlässigkeitsbereichen der durchlässigen Flächenanode auf der anderen Seite der Scheidewand zur Herstellung einer Verbindung zwischen der Kathodenkammer und Anodenkammer durch die Scheidewand hindurch ausgerichtet sind.

17. Vorrichtung nach einem der Ansprüche 1 bis 16, **dadurch gekennzeichnet,** daß die Strömungsrichtung des Abwassers in der Anodenkammer mit der anodisch nicht löslichen Anode in umgekehrter Richtung zur Strömungsrichtung des Abwassers in der Anodenkammer mit der löslichen Anode vorgesehen ist.

18. Vorrichtung nach einem der Ansprüche 1 bis 17, **dadurch gekennzeichnet,** daß das Abwasser in der Anodenkammer mit der anodisch löslichen Anode entlang einer Seite der Kathodenkammer und in der Anodenkammer mit der löslichen Anode entlang einer der einen Seite gegenüberliegenden Seite der Kathodenkammer strömt.

19. Vorrichtung nach einem der Ansprüche 1 bis 18, **dadurch gekennzeichnet,** daß die Kathode eine Stahlkathode ist.

20. Vorrichtung nach einem der Ansprüche 1 bis 19, **dadurch gekennzeichnet,** daß die Anodenkammer mit der löslichen Anode einen perforierten Boden (15) aufweist.

21. Vorrichtung nach einem der Ansprüche 1 bis 20, **dadurch gekennzeichnet,** daß die Anodenkammer mit der löslichen Anode einen perforierten Boden aufweist und unter dem perforierten Boden eine mit der wenigstens einen Kathodenkammer in Verbindung stehende Misch- und Auffangkammer (16) angeordnet ist.

22. Vorrichtung nach einem der Ansprüche 1 bis 21, **dadurch gekennzeichnet,** daß in der Anodenkammer mit der löslichen Anode nahe der Scheidewand bzw. der Scheidewände ein Schutzgitter (18, 19) aus einem dielektrischen Material angeordnet ist.
